# EUROPÄISCHE PATENTSCHRIFT

(11) **EP 3 145 871 B1**
(45) Veröffentlichungstag und Bekanntmachung des Hinweises auf die Patenterteilung: **21.08.2019**
(21) Anmeldenummer: 15726877.2
(22) Anmeldetag: 18.05.2015
(51) Int. Cl.: C02F 1/00, B01F 5/06

(54) **FLUIDISIERUNGSVORRICHTUNG**
FLUIDIZATION DEVICE
DISPOSITIF DE FLUIDIFICATION

(30) Priorität: 19.05.2014 DE 102014209396
(43) Veröffentlichungstag der Anmeldung: 29.03.2017
(73) Patentinhaber: ALTHOFF, Klaus Jürgen, D-88696 Owingen/Bodensee (DE)
(72) Erfinder: ALTHOFF, Klaus Jürgen, D-88696 Owingen/Bodensee (DE)
(74) Vertreter: Daub, Thomas
(86) Internationale Anmeldenummer: PCT/EP2015/060831
(87) Internationale Veröffentlichungsnummer: WO 2015/177061

(56) Entgegenhaltungen:
- DE-A1- 3 827 317
- FR-A1- 2 851 559
- US-A1- 2006 272 624
- US-A1- 2007 062 863
- US-A1- 2009 101 564
- Klaus Jürgen Althoff: "Bormia - Paradimenwechsel in der Wasserforschung", , 1. April 2014 (2014-04-01), XP055206204, Gefunden im Internet: URL:https://web.archive.org/web/2014040116 5452/http://www.bormia.de/index.php [gefunden am 2015-08-04]
- Klaus Jürgen Althoff: "Technisches Datenblatt für Bormia Bio-Quellwassergenerator", , 1. April 2014 (2014-04-01), XP055206206, Gefunden im Internet: URL:https://web.archive.org/web/2014031118 5639/http://www.bormia.de/fileadmin/docume nts/B-102_UMA_10_GS_komplett..pdf [gefunden am 2015-08-04]

## Beschreibung

Die Erfindung betrifft eine Vorrichtung zur Behandlung eines Fluids umfassend mindestens drei mit einem Fluid durchströmbare Spiralfedern, die in einem Behälter so angeordnet sind, dass sich zwischen den Spiralfedern ein innerer Zwischenraum bildet, der gleichzeitig mit dem Fluid durchströmbar ist.

Aus der DE 20 2004 012 440 U1 ist eine gedrehte oder gewickelte Spiralfeder zum inneren Durchfluss für Flüssigkeit aller Art zur Einbringung in einen flexiblen Schlauch oder ein festes Rohr bekannt. Die Spiralfeder in der vorstehend genannten Gebrauchsmusterschrift ist dabei eine gewickelte bzw. eine gedrehte Spiralfeder, die bevorzugt eine Länge von 370 mm aufweist. Die in der Gebrauchsmusterschrift DE 20 2004 012 440 U1 beschriebene Vorrichtung wird zur Wasserbelebung verwendet. Grundgedanke ist die Vitalisierung durch Dynamisierung, d.h. Verwirbelung. Der Wirbel ist ein effektives universelles Naturprinzip. In der Natur finden fast alle Reinigungs- und Vitalisationsprozesse via Verwirbelung statt; Wasser, Wind und Wolken sind ein offensichtliches Beispiel wie die Natur Reinigung und aufbauende Energetisierung zugleich betreibt. Mit der in der vorstehend genannten Gebrauchsmusterschrift beschriebenen Vorrichtung wird eine derartige Vitalisierung nachgebildet. Die eingesetzte Spiralfeder zeichnet sich dadurch aus, dass sie, in Längsrichtung gesehen, Verjüngungen und Erweiterungen aufweist. Auch kann der innere Durchmesser der Spiralfedern variieren. Es hat sich nun aber gezeigt, dass eine Vorrichtung mit einer derartigen Spiralfeder noch Nachteile aufweist, weil die durch diese Spiralfeder hindurchzufördernde Fluidmenge, insbesondere Wassermenge zu gering ist, sodass nicht die ausreichende Wirkung für die Revitalisierung des Fluids, insbesondere des Wassers erreicht werden kann.

Des Weiteren ist aus US 2006/0272624 A1 bereits eine Vorrichtung zur Behandlung eines Fluids bekannt, welche mindestens drei gewickelte und/oder gedrehte Spiralfedern umfasst, die von dem Fluid durchströmbar sind, die in einem Inneren eines Behälters mit einer Einströmseite und einer gegenüberliegenden Ablaufseite symmetrisch und raumfüllend angeordnet sind, wobei die Spiralfedern in Längsrichtung einen sich kontinuierlich verändernden Querschnitt aufweisen, so dass Verjüngungen und Erweiterungen entstehen und die mindestens drei Spiralfedern in dem Behälter so angeordnet sind, dass sie über ihre Erweiterungen aneinanderliegen und mindestens einen inneren Zwischenraum definieren, der ebenfalls von dem Fluid durchströmbar ist, wobei die Spiralfedern gleich aufgebaut sind und in Längsrichtung gesehen verschiedene Querschnittserweiterungen aufweisen.

Ausgehend hiervon ist es die Aufgabe der vorliegenden Erfindung, eine Vorrichtung zur Behandlung eines Fluids anzugeben, die dazu geeignet ist, größere Mengen eines Fluids zu vitalisieren, wobei gleichzeitig noch erreicht werden soll, dass sowohl eine Homogenisierung wie auch eine Verwirbelung möglich sein soll.

Die Erfindung wird durch die kennzeichnenden Merkmale des Patentanspruchs 1 gelöst.

Die Unteransprüche zeigen vorteilhafte Weiterbildungen auf.

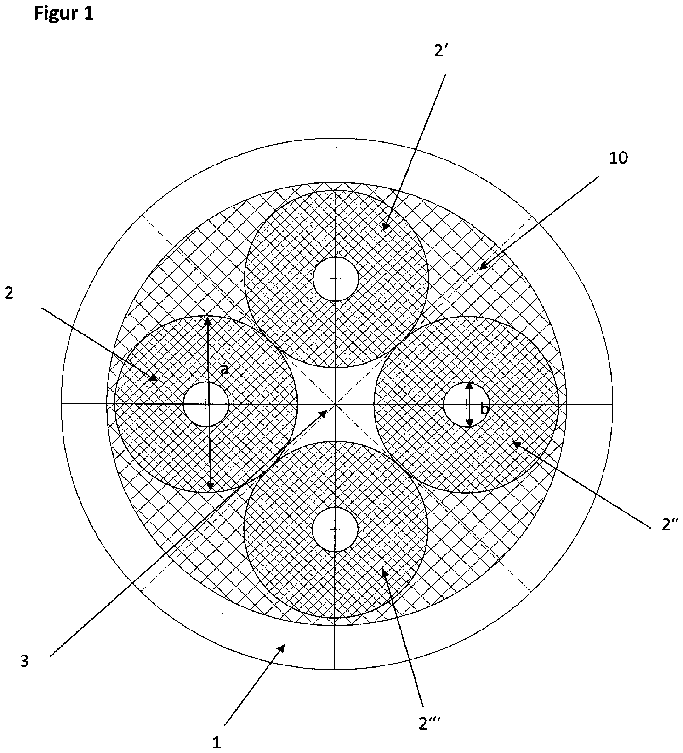

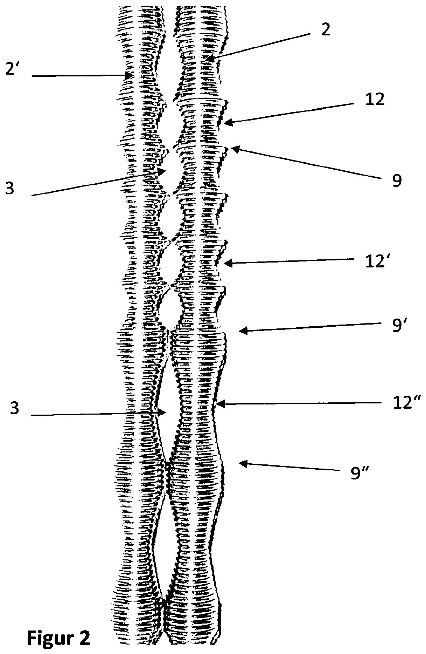

Die Erfindung geht aus von einer Vorrichtung zur Behandlung eines Fluids, die mindestens drei gewickelte und/oder gedrehte Spiralfedern umfasst, die von einem Fluid durchströmbar sind, wobei diese Spiralfedern in einem Inneren eines Behälters mit einer Einströmseite und einer gegenüberliegenden Ablaufseite symmetrisch und raumfüllend angeordnet sind. Die Anordnung und Ausbildung der Spiralfedern ist dabei so gestaltet, dass diese im Inneren des Behälters gleichlaufend ausgebildet sind, wobei die Spiralfedern in Längsrichtung einen sich kontinuierlich verändernden Querschnitt aufweisen, wobei die Spiralfedern gleich aufgebaut sind und in Längsrichtung gesehen verschiedene Querschnittserweiterungen aufweisen, über ihre Erweiterungen aneinander liegen und so durch bzw. in den Verjüngungen einen inneren Hohlraum definieren, der gleichfalls von dem Fluid durchströmbar ist. Diese Hohlräume sind in der Querschnittsansicht (Fig. 1 Bezugszeichen 3) zu erkennen und, wenn 2 Spiralen längs aneinander liegen (Fig. 2), durch die Räume zwischen den Spiralen.

Erfindungsgemäß wird vorgeschlagen, dass die Spiralfedern gleich laufende Verjüngungen und Erweiterungen aufweisen und sich die Verjüngungen und Erweiterungen zwar kontinuierlich verändern, jedoch in ihrer Verjüngung bzw. Erweiterung unterschiedlich stark ausgeprägt sind.

Erfindungsgemäß ist dabei der Behälter zylindrisch oder mehreckig, z.B. tetraedrisch, hexaedrisch oder oktaedrisch ausgebildet. Wesentlich bei der vorliegenden Erfindung ist es, dass die Spiralfedern in dem Behälter, bevorzugt im zylindrischen Behälter, so raumfüllend eingebaut sind, dass sie aneinander liegen und den vorstehend schon beschriebenen inneren Hohlraum definieren.

Damit steht nun eine Vorrichtung zur Vitalisierung von Fluid, insbesondere von Wasser zur Verfügung, die auch größere Fluidmengen problemlos verarbeiten kann. Durch die Anordnung von mindestens drei Spiralfedern und die Ausbildung eines definierten Innenhohlraums zwischen den Spiralfedern wird auch eine weitere Verbesserung der Verwirbelungscharakteristik erreicht.

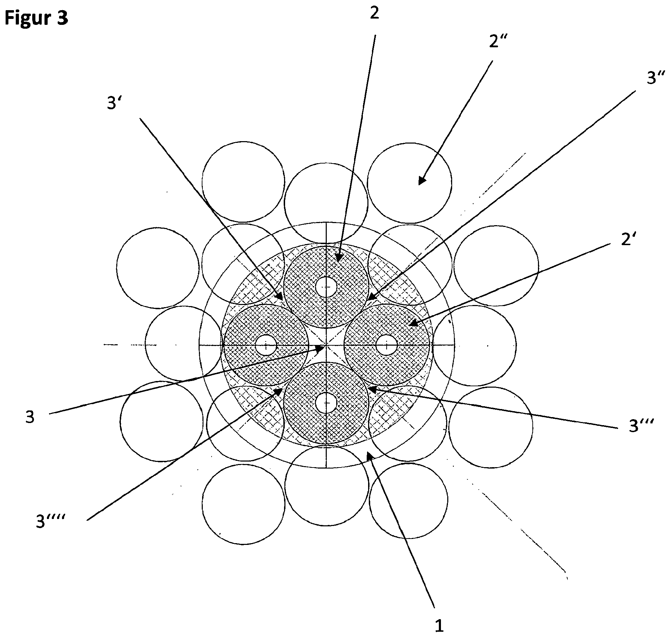

Gemäß der vorliegenden Erfindung sind dabei die Spiralfedern im Inneren eines zylindrischen Behälters eingebaut, wobei die Spiralfedern so angeordnet werden können, dass das Fluid links- oder rechtsdrehend in den Spiralfedern geführt wird. Dies wird durch entsprechend gewickelte und/oder gedrehte Spiralfedern erreicht. Die Ausbildung des Behälters entspricht der Länge nach etwa der der Spiralfedern. Der Durchmesser des Behälters ist entsprechend so dimensioniert, dass die ausgewählte Anzahl an Spiralfedern im Inneren angeordnet werden kann. Der Durchmesser ist dabei genau so definiert, dass die Spiralfedern mit ihrer Außenseite über die Erweiterungen an der Innenwand des Behälters zum Liegen kommen und im Inneren den vorstehend beschriebenen Hohlraum definieren. Gemäß der vorliegenden Erfindung ist es dabei möglich drei oder auch mehr Spiralfedern, z.B. vier Spiralfedern im Inneren anzuordnen, wie z.B. in Figur 3.

Der zylindrische Behälter kann bevorzugt aus einem Kunststoffmaterial, Metall, Keramik oder Glas bestehen. Der Behälter besitzt einströmseitig einen fluiddicht mit dem Behälter verschließbaren Deckel, wobei der Deckel so ausgebildet ist, dass dieser das eintretende Fluid sowohl in den inneren Zwischenraum der Spiralfedern wie in die Spiralfeder selbst führen kann. Die Ausbildung eines derart fluiddichten Deckels kann auch so erfolgen, dass dieser über eine Dichtung mit dem Zylinder fest verbunden wird. Die erfindungsgemäße Vorrichtung besitzt dann auslassseitig wiederum einen Deckel analog an der Einlassseite, wobei dieser ebenfalls fluiddicht verschlossen ist und zum Abführen des vitalisierten Fluids dient.

Erfindungsgemäß werden unter einem Fluid sowohl Flüssigkeiten verschiedener Viskositäten wie auch Gase verstanden. Die erfindungsgemäße Vorrichtung kann somit nicht nur zum Vitalisieren von Wasser sondern auch zum Verwirbeln und Homogenisieren von Fluiden bzw. Gemischen unterschiedlicher Art, sowie zur Behandlung von Gasen zum Beispiel als ein Abgaskatalysator eingesetzt werden.

Bei der erfindungsgemäßen Vorrichtung ist es dabei möglich, dass im Innenraum die Spiralfedern so angeordnet werden, dass sofern sie in einer gleichen Anzahl vorhanden sind sowohl eine gleiche Anzahl rechtsdrehender wie linksdrehender Spiralfedern im Zylinder positioniert sind, sodass dann letztlich ein Homogenisator entsteht. Die Erfindung umfasst dabei selbstverständlich auch Ausführungsformen, bei denen nur eine Sorte von Spiralfedern, z.B. rechtsdrehende oder linksdrehende vorhanden sind, sodass es letztlich zu einer einseitigen Fluidverwirbelung kommt.

Bevorzugt sind bei der erfindungsgemäßen Vorrichtung die Spiralfedern mittels einer Ummantelung im Behälter, bevorzugt im zylindrischen Behälter, angeordnet. Die Ummantelung dient im Wesentlichen dazu, eine genaue Fixierung und Ausrichtung der Spiralfedern zu ermöglichen. Die Ummantelung, die aus gängigen Werkstoffen z.B. aus Kunststoff bestehen kann, kann zusätzlich noch zur Modulation verschiedene Werkstoffe wie Kupfer, Marmor oder Metalle, wie Kupfer oder Kristalle enthalten. Diese Stoffe können verteilt in der Ummantelung angeordnet sein.

Bei der erfindungsgemäßen Vorrichtung ist es weiterhin auch möglich, dass derjenige Zwischenraum, der zwischen der Behälterinnenwand und den Spiralfedern entsteht, verschlossen ist. Das Verschließen kann durch Ausfüllen mit einer Kunststoffmasse oder einem anderen Füllmaterial erreicht werden. Dadurch wird sichergestellt, dass auf der Einströmseite, das einströmenden Fluid, z.B. das Wasser ausschließlich in den inneren Zwischenraum zwischen den Spiralen und durch die Spiralen geführt wird.

Die Erfindung umfasst aber auch Ausführungsformen, bei denen auch dieser äußere Zwischenraum freigelassen wird, sodass auch hier noch die Möglichkeit besteht eine weitere Verwirbelung des Fluids zu bewerkstelligen.

Die Spiralfeder, die bei der erfindungsgemäßen Vorrichtung eingesetzt werden, können eine Länge von 10 mm bis 3500 mm, bevorzugt 300 mm bis 500 mm, ganz besonders bevorzugt 370 mm aufweisen.

Diese Längendimensionen gelten dann selbstverständlich für die Dimensionierung des Behälters entsprechend.

Die Spiralfedern sind dabei, wie bereits aus dem deutschen Gebrauchsmuster DE 20 2004 012 440 U1 bekannt in ihrem Querschnitt variierend, d. h. sie besitzen Verjüngungen und Erweiterungen. Es ist also insbesondere vorgesehen, dass die Spiralfedern so ausgebildet sind, dass sie sich in Längsrichtung gesehen kontinuierlich aufweiten und dann wieder verengen. Bevorzugt sind die Verjüngungen bzw. Verengungen anfänglich im Verlauf gering, ziehen sich dann aber kontinuierlich zum Ende hin nach Innen, sodass eine sich im Gesamtverlauf verengende trichterähnliche Reduzierung des Durchmessers der Spirale ausbildet. Die Spirale selbst kann dabei aus gängigen Materialien wie z.B. Edelstahl, Keramik, Glas oder Kunststoff bestehen. Die erfindungsgemäße Vorrichtung zeichnet sich weiterhin noch dadurch aus, dass die Spiralfeder einen inneren Durchmesser aufweist, der gleichfalls sich noch kontinuierlich verändern kann. Im Ergebnis führt dies dazu, dass sich durch den kontinuierlich sich verändernden Querschnitt im Inneren der Spiralfeder, abwechselnd der Druck und Vakuummomente in der Spiralfeder selbst überlagern. Bei der erfindungsgemäßen Vorrichtung sind nun wie bereits vorstehend beschrieben mehrere dieser Spiralfedern in einer bestimmten Art und Weise im Inneren des zylindrischen Behälters raumfüllend angeordnet, sodass sich noch ein innerer Zwischenraum bildet und damit ein gesteigerter Effekt der Homogenisierung bzw. Verwirbelung entsteht.

Im Falle von Wasser kann z.B. die erfindungsgemäße Vorrichtung direkt an einen Wasserhahn über entsprechende Verbindungsstücke angeschlossen werden. Das Wasser, das somit aus dem Hahn austritt, wird über die Einströmseite in die erfindungsgemäße Vorrichtung geführt und nach entsprechender Wasserbehandlung auslassseitig wieder abgegeben. Es hat sich nun gezeigt, dass ein derart behandeltes Fluid, wie Wasser, im Bezug auf die Vitalisierung überlegene Eigenschaften aufweist.

Die Erfindung wird nachfolgend anhand von zwei Figuren näher beschrieben.
Figur 1 zeigt schematisch einen Querschnitt durch eine erfindungsgemäße Vorrichtung mit vier Spiralfedern und den entstehenden Zwischenraum 3.
Figur 2 zeigt zwei nebeneinander angeordnete Spiralfedern in ihrer Längsorientierung mit den sich verändernden Querschnitten und dem sich daraus bildenden Zwischenräumen 3.
Figur 3 zeigt eine Anordnung mit mehreren Spiralfedern und den dazugehörigen unterschiedlichen Zwischenräumen zwischen den Federn.

Figur 1 zeigt im Querschnitt eine erfindungsgemäße Vorrichtung zur Behandlung eines Fluids. Wie aus der Figur 1 hervorgeht, sind in einem Behälter 1, der zylindrisch ausgebildet ist und einen Durchmesser von 40 mm aufweist, vier Spiralfedern, 2, 2', *2"* und *2"'* angeordnet. Die Spiralfedern sind dabei im Inneren des zylindrischen Behälters so über eine Ummantelung 10 angeordnet, dass die Spiralfedern 2, 2', *2"* und *2"'* mit ihrer Außenseite die Innenwand des Behälters 1 berühren. Die Dimensionierung des zylindrischen Behälters muss deshalb auf die Durchmesser der Spiralfedern abgestimmt sein. Wie aus Figur 1 hervorgeht sind im Beispielsfall die vier Spiralfedern 2, 2', *2*" und *2"'* so raumfüllend in dem Inneren des zylindrischen Behälters angeordnet, dass ein innerer Zwischenraum 3 entsteht. Der innere Zwischenraum 3 wird dabei vollständig durch die vier Spiralfedern 2, 2', *2"* und *2"'* umschlossen, sodass ein von oben nach unten durchströmbarer Zwischenraum definiert ist. Die Dimensionierung dieses Zwischenraums 3 hängt selbstverständlich von der der Anordnung und Dimensionierung der Durchmesser der Spiralfedern 2, 2', *2"* und *2"'* und des Durchmessers des zylindrischen Behälters ab. Im vorliegenden Beispielsfall ist nur der obere Querschnitt der erfindungsgemäßen Vorrichtung gezeigt. Die vier Spiralfedern haben im Beispielsfall der Figur 1 eine Länge von 370 mm und weisen einen in sich variierenden Querschnitt auf, wie er später bei Figur 2 näher erläutert wird. Bei Inbetriebnahme der erfindungsgemäßen Vorrichtung wird dann durch den einströmseitigen Deckel (nicht abgebildet) das Fluid in den Hohlraum 3 wie auch in die Spiralfedern 2, 2', *2"* und *2"'* geführt. Die Spiralfedern 2, 2', *2"* und *2"'* sind so ausgebildet, dass sie einströmseitig einen inneren Durchmesser besitzen, der mit a bezeichnet ist und ausströmseitig einen inneren Durchmesser b besitzen. Der Innendurchmesser der Spiralfeder ändert sich über die gesamte Länge der Spiralfeder von einströmseitig 7 mm auf dann auslassseitig 2 mm. Dies ist schemenhaft in Figur 1 durch a und b dargestellt.

Zum Betrieb der erfindungsgemäßen Vorrichtung ist selbstverständlich ein mit dem zylindrischen Behälter 1 fluiddicht verbindbarer Deckel vorgesehen (hier nicht abgebildet) der so ausgestaltet ist, dass das Fluid z.B. das Wasser sowohl in das Innere der vier Spiralfedern 2, 2', 2", 2"' wie auch in den Zwischenraum 3 geführt werden kann. Auslassseitig ist ebenfalls ein entsprechender Abschlussdeckel vorgesehen, der wie der Deckel an der Einströmseite über geeignete Dichtelemente mit dem zylindrischen Behälter verbunden ist.

Figur 2 zeigt nun zwei Spiralfedern 2, 2', wie sie in der Ausführungsform nach Figur 1 eingebaut sind. Die Spiralfedern 2 bzw. 2' sind gleich aufgebaut und weisen in Längsrichtung gesehen verschiedene Querschnittserweiterungen auf. Die erste Querschnittserweiterung ist mit 9, die zweite und dritte Querschnittserweiterung mit 9' und 9" bezeichnet. Wie aus Figur 2 hervorgeht sind die Spiralfedern 2, 2' der Erfindung dabei so aufgebaut, dass die Verjüngungen und Erweiterungen zwar kontinuierlich sich verändern, jedoch in der Verjüngung bzw. Erweiterung unterschiedlich stark ausgeprägt sind. Wichtig ist bei der erfindungsgemäßen Anordnung, dass die jeweils im Inneren des zylindrischen Behälters angeordneten Spiralfedern gleich laufende Erweiterungen und Verjüngungen aufweisen. Im Ergebnis bedeutet dies, dass die Spiralfeder 2 und die Spiralfeder 2' in Längsrichtung gesehen gleichlaufend sind, d.h. an den gleichen Stellen Erweiterungen 9, 9' bzw. 9" aufweisen müssen. Dadurch werden die in Figur 1 gezeigten Zwischenräume 3 gebildet. Die Zwischenräume verändern sich je nach Ausschnittsverdickung in der Längsachse 9,9' und 9" und erzeugen somit Verwirbelungsmöglichkeiten für das Fluid. Materialmäßig kann eine die entsprechende Spiralfeder wie vorstehend abgebildet aus Kunststoff, Edelstahl, Keramik oder Glas gefertigt sein. Die Länge der abgebildeten Spiralfeder bedeckt 370 mm. Die Dicke der größten Verdicktung, d.h. der Durchmesser an der dicksten Stelle, z.B. bei 9' ist 4 mm.

Erfindungsgemäß sind nun in dem zylindrischen Behälter der wie vorstehend ausgebildet ist, mindestens 3 Spiralfedern symmetrisch angeordnet, wobei jeweils gefordert ist, dass die Spiralfedern raumfüllend im Inneren des zylindrischen Behälters positioniert sind. Raumfüllend gemäß der Erfindung bedeutet, dass die Spiralfedern mit ihren Erweiterungen an den Innenwänden anliegen und im Inneren den schon vorstehend beschriebenen Hohlraum bilden.

Figur 3 zeigt nun rein schematisch den Aufbau einer erfindungsgemäßen Vorrichtung, bei der eine Vielzahl von Spiralfedern 2, 2' ff. zu einem System zusammengebaut sind. In Figur 3 ist der zylindrische Behälter, in dem die Spiralfedern 2, 2' ff. angeordnet sind, nicht mit abgebildet. Auch hier sind, analog zu Figur 1, die Spiralfedern so angeordnet, dass ein innerer Zwischenraum 3 entsteht. Die Dimensionierung dieses Zwischenraums 3 hängt ebenfalls wieder von der Dimensionierung der Durchmesser der einzelnen Spiralfedern ab. Wie aus Figur 3 hervorgeht, entstehen durch die Mehrzahl ringförmig angeordneter Spiralfedern 2, 2' ff zusätzliche Zwischenräume 3', 3" und *3"'*, die ebenfalls vom Fluid durchströmbar sind. Diese sorgen für eine zusätzliche Verwirbelung. Zur Klarstellung zur Figur 3 ist noch darauf hinzuweisen, dass die zusätzlichen Spiralfedern 2' und 2" rein schematisch in die Figur 1 mit eingezeichnet wurden. Der Behälter 1 umschließt somit in der Realität alle Spiralfedern 2, 2' und 2".

Derartige Fluidisierungsvorrichtungen können zum Beispiel dann zur Fluidisierung von Gasen insbesondere von Abgasen im Automobilbereich eingesetzt werden.

## Patentansprüche

1. Vorrichtung, zur Behandlung eines Fluids umfassend mindestens drei gewickelte und/oder gedrehte Spiralfedern (2, 2', 2" und 2"'), die von dem Fluid durchströmbar sind, die in einem Inneren eines Behälters (1) mit einer Einströmseite und einer gegenüberliegenden Ablaufseite symmetrisch und raumfüllend angeordnet sind, wobei die Spiralfedern (2, 2', 2" und 2"') in Längsrichtung einen sich kontinuierlich verändernden Querschnitt aufweisen, so dass Verjüngungen (12, 12', 12") und Erweiterungen (9, 9', 9") entstehen und die mindestens drei Spiralfedern (2, 2', 2" und 2"') in dem Behälter (1) so angeordnet sind, dass sie über ihre Erweiterungen (9, 9', 9") aneinanderliegen und mindestens einen inneren Zwischenraum (3) definieren, der ebenfalls von dem Fluid durchströmbar ist, wobei die Spiralfedern (2, 2', 2" und 2"') gleich aufgebaut sind und in Längsrichtung gesehen verschiedene Querschnittserweiterungen aufweisen, **dadurch gekennzeichnet, dass** die Spiralfedern (2, 2', 2" und 2"') gleich laufende Verjüngungen (12, 12', 12") und Erweiterungen (9, 9', 9") aufweisen und sich die Verjüngungen (12, 12', 12") und Erweiterungen (9, 9', 9") zwar kontinuierlich verändern, jedoch in ihrer Verjüngung (12, 12', 12") bzw. Erweiterung (9, 9', 9") unterschiedlich stark ausgeprägt sind.

2. Vorrichtung nach Anspruch 1, **dadurch gekennzeichnet, dass** der Behälter (1) zylindrisch, rechteckig, hexaedrisch oder oktaedrisch ist.

3. Vorrichtung nach Anspruch 1 oder 2, **dadurch gekennzeichnet, dass** die Spiralfedern (2, 2', 2" und 2'") aus einem gewickelten und/oder gedrehten Draht links und/oder rechts drehend in dem Behälter (1) eingebaut sind.

4. Vorrichtung nach mindestens einem der Ansprüche 1 bis 3, **dadurch gekennzeichnet, dass** die Einströmseite und die Ablaufseite mit einem fluiddichten Deckel versehen sind, der so ausgebildet ist, dass das Fluid in die Spiralfedern und den durch die Spiralfeder (2, 2', 2" und 2'") definierten Zwischenraum (3) einströmen kann.

5. Vorrichtung nach mindestens einem der Ansprüche 1 bis 4, **dadurch gekennzeichnet, dass** eine gerade Anzahl von Spiralfedern (2, 2', 2" und 2"'), bevorzugt 4, vorgesehen sind, wobei jeweils die gleiche Anzahl an rechtsdrehenden und linksdrehenden Spiralfedern (2, 2', 2"
und 2"') im Behälter (1) eingebaut sind, so dass ein Homogenisator entsteht.

6. Vorrichtung nach mindestens einem der Ansprüche 1 bis 4, **dadurch gekennzeichnet, dass** die Spiralfedern (2, 2', 2" und 2"') entweder rechtsdrehend oder linksdrehend im Behälter (1) eingebaut sind, so dass ein einseitiger Fluidverwirbler entsteht.

7. Vorrichtung nach mindestens einem der Ansprüche 1 bis 6, **dadurch gekennzeichnet, dass** die Spiralfeder (2, 2', 2" und 2"') eine Länge von 10 mm bis 3500 mm, bevorzugt 300 mm bis 500 mm aufweist.

8. Vorrichtung nach mindestens einem der Ansprüche 1 bis 7, **dadurch gekennzeichnet, dass** die Spiralfedern (2, 2', 2" und 2"') einen Innendurchmesser von 2 mm bis 10 mm aufweisen.

9. Vorrichtung nach mindestens einem der Ansprüche 1 bis 8, **dadurch gekennzeichnet, dass** das Fluid eine Flüssigkeit oder ein Gas ist.

10. Vorrichtung nach mindestens einem der Ansprüche 1 bis 9, **dadurch gekennzeichnet, dass** die Spiralfedern (2, 2', 2" und 2"') mit einer Ummantelung (10) im Behälter (1) fixiert sind.

## Claims

1. Device for a treatment of a fluid, comprising at least three wound and/or turned spiral springs (2, 2', 2" and 2"'), which are capable of being flowed through by the fluid, which are arranged, in a symmetrical and space-filling manner, in an interior of a container (1) with an entry side and an opposite discharge side,
the spiral springs (2, 2', 2" and 2"') having a continuously varying cross section in their longitudinal direction, resulting in taperings (12, 12', 12") and widenings (9, 9', 9") and the at least three spiral springs (2, 2', 2" and 2"') being arranged in the container (1) in such a way that they are adjacent to one another via their widenings (9, 9', 9") and define at least one inner interstice (3) that is also capable of being flowed through by the fluid, the spiral springs (2, 2', 2" and 2"') being configured identically and comprising, viewed in the longitudinal direction, a variety of cross section widenings, **characterised in that** the spiral springs (2, 2', 2" and 2"') have identically extending taperings (12, 12', 12") and widenings (9, 9', 9") and the taperings (12, 12', 12") and widenings (9, 9', 9"), while varying continuously, differ in the intensity of their tapering (12, 12', 12") and/or widening (9, 9', 9").

2. Device according to claim 1, **characterised in that** the container (1) is cylindrical, rectangular, hexaedral or octaedral.

3. Device according to claim 1 or 2, **characterised in that** the spiral springs (2, 2', 2" and 2"'), of a wound and/or turned wire, are mounted in the container (1) in clockwise and/or anti-clockwise fashion.

4. Device according to at least one of claims 1 to 3, **characterised in that** the entry side and the discharge side are provided with a fluid-tight cover, which is implemented to allow the fluid flowing into the spiral springs (2, 2', 2" and 2'") and into the interstice (3) defined by the spiral springs (2, 2', 2" and 2"').

5. Device according to at least one of claims 1 to 4, **characterised in that** an even number of spiral springs (2, 2', 2" and 2"'), preferably four spiral springs (2, 2', 2" and 2"'), are provided, wherein respectively the same number of clockwise and anti-clockwise spiral springs (2, 2', 2" and 2"') are mounted in the container (1), as a result of which a homogenisator is realized.

6. Device according to at least one of claims 1 to 4, **characterised in that** the spiral springs (2, 2', 2" and 2"') are mounted in the container (1) either clockwise or anti-clockwise, as a result of which a one-sided fluid swirler is realized.

7. Device according to at least one of claims 1 to 6, **characterised in that** the spiral spring (2, 2', 2" and 2"') has a length of 10 mm to 3500 mm, preferably 300 mm to 500 mm.

8. Device according to at least one of claims 1 to 7, **characterised in that** the spiral springs (2, 2', 2" and 2"') have an inner diameter of 2 mm to 10 mm.

9. Device according to at least one of claims 1 to 8, **characterised in that** the fluid is a liquid or a gas.

10. Device according to at least one of claims 1 to 9, **characterised in that** the spiral springs (2, 2', 2" and 2"') are fixated in the container (1) via an envelope (10).

## Revendications

1. Dispositif pour traiter un fluide, comprenant au moins trois ressorts à spires (2, 2', 2" et 2"') roulés et/ou tournés, qui peuvent être parcourus par le fluide, qui sont agencés, symétriquement et remplissant l'espace, à l'intérieur d'un récipient (1) ayant une face d'entrée et une face de déversement opposée,
les ressorts à spires (2, 2', 2" et 2"') ayant en direction longitudinale une section transversale continument variante, en sorte qu'il y ait des rétrécissements (12, 12', 12") et des élargissements (9, 9', 9") et les au moins trois ressorts à spires (2, 2', 2" et 2"') sont agencés dans le récipient (1) de telle manière qu'ils sont adjacents par ses élargissements (9, 9', 9") et définissent au moins un interstice intérieur (3) qui peut aussi être parcouru par le fluide,
les ressorts à spires (2, 2', 2" et 2"') étant structurés identiquement et comprenant, vus en direction longitudinale, des élargissements de section transversale diverses,
**caractérisé en ce que** les ressorts à spires (2, 2', 2" et 2"') comportent des rétrécissements (12, 12', 12"9 et des élargissements (9, 9', 9") s'étendant identiquement et les rétrécissements (12, 12', 12") et les élargissements (9, 9', 9") variant continument mais sont implémentés différemment quant à son rétrécissement (12, 12', 12") ou son élargissement (9, 9', 9").

2. Dispositif selon la revendication 1,
**caractérisé en ce que** le récipient (1) est cylindrique, rectangulaire, hexaèdre ou octaèdre.

3. Dispositif selon la revendication 1 ou 2,
**caractérisé en ce que** les ressorts à spires (2, 2', 2" et 2"'), implémentés d'un fil métallique roulé ou tourné, sont montés dans le récipient (1) de façon lévogyre et/ou dextrogyre.

4. Dispositif selon au moins l'une des revendications 1 à 3,
**caractérisé en ce que** la face d'entrée et la face de déversement sont pourvu d'un couvercle étanche aux fluides, qui est réalisé de telle façon que le fluide peut s'écouler dans les ressorts à spires (2, 2', 2" et 2"') et dans l'interstice (3) défini par les ressorts à spires (2, 2', 2" et 2"').

5. Dispositif selon au moins l'une des revendications 1 à 4,
**caractérisé en ce qu'**un nombre pair des ressorts à spires (2, 2', 2" et 2"'), préférentiellement quatre ressorts à spires (2, 2', 2" et 2"'), sont prévus, où respectivement un nombre égal des ressorts à spires (2, 2', 2" et 2"') dextrogyres et lévogyres sont montés dans le récipient (1), en sorte qu'un homogénéisateur soit produit.

6. Dispositif selon au moins l'une des revendications 1 à 4,
**caractérisé en ce que** les ressorts à spires (2, 2', 2" et 2"') sont montés dans le récipient (1) en façon ou dextrogyre ou lévogyre, en sorte qu'un tourbilloneur-fluide unilatéral soit produit.

7. Dispositif selon au moins l'une des revendications 1 à 6,
**caractérisé en ce que** le ressort à spires (2, 2', 2" et 2"') ait une longueur de 10 mm à 3500 mm, de préférence 300 mm à 500 mm

8. Dispositif selon au moins l'une des revendications 1 à 7,
**caractérisé en ce que** les ressorts à spires (2, 2', 2" et 2"') comportent un diamètre intérieur de 2 mm à 10 mm.

9. Dispositif selon au moins l'une des revendications 1 à 8,
**caractérisé en ce que** le fluide est un liquide ou un gaz.

10. Dispositif selon au moins l'une des revendications 1 à 9,
**caractérisé en ce que** les ressorts à spires (2, 2', 2" et 2"') sont fixés dans le récipient (1) par un enveloppement (10).
